(19) Europäisches Patentamt
European Patent Office
Office européen des brevets

(11) **EP 3 333 589 A1**

(12) **EUROPEAN PATENT APPLICATION**
published in accordance with Art. 153(4) EPC

(43) Date of publication:
**13.06.2018 Bulletin 2018/24**

(51) Int Cl.:
*G01S 7/03* (2006.01)  *B32B 3/12* (2006.01)
*B60R 19/52* (2006.01)  *G01S 13/93* (2006.01)
*H01Q 1/42* (2006.01)

(21) Application number: **16834906.6**

(22) Date of filing: **06.07.2016**

(86) International application number:
**PCT/JP2016/070035**

(87) International publication number:
**WO 2017/026209 (16.02.2017 Gazette 2017/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.08.2015 JP 2015157170**

(71) Applicant: **Kabushiki Kaisha
Tokai-Rika-Denki-Seisakusho
Niwa-gun, Aichi-ken 480-0195 (JP)**

(72) Inventor: **KOSUGI, Masanori
Aichi 480-0195 (JP)**

(74) Representative: **TBK
Bavariaring 4-6
80336 München (DE)**

(54) **RADIO WAVE TRANSMISSION COMPONENT**

(57)    An electromagnetic wave transmitting component including an electromagnetic wave transmitting unit (design member (16)), a covering sheet (covering film (30)), and a frame (14). The electromagnetic wave transmitting unit includes a flat plate shaped base plate section (18) formed by arraying plural first tubes (tubes 22) formed from a dielectric arrayed such that respective open ends of the first tubes are in-plane, and a protruding section (20) joined to the first tubes of the base plate section and formed by arraying plural second tubes (tubes 22) formed from a dielectric arrayed such that the respective open ends of the second tubes form a predetermined planar shape. The covering sheet covers the protruding section together with covering a surface of the base plate section on the protruding section side. The frame houses the electromagnetic wave transmitting unit and one opening of the frame is sealed by the base plate section of the electromagnetic wave transmitting unit.

FIG.2

**Description**

Technical Field

The present invention relates to an electromagnetic wave transmitting component that transmits electromagnetic waves transceived by a radar device.

Background Art

Various types of devices utilizing electromagnetic waves are installed to vehicles. For example, devices that are provided to vehicles and utilize electromagnetic waves include smart entry systems that lock and unlock doors according to signals issued from a wireless key. Japanese Patent Application Laid-Open (JP-A) No. 2013-214844 describes a vehicle door handle device for a smart entry system. The door handle device of JP-A No. 2013-214844 has an antenna cover member that is mounted at a vehicle width direction outside of a door handle body, which houses an antenna of a smart entry system at the vehicle width direction inside thereof. The antenna cover member covers the antenna and the door handle body. The antenna cover member is configured from a high refractive index layer at the vehicle width direction outside and a low refractive index layer at the vehicle width direction inside, and an irregular surface portion is formed on the low refractive index layer side of the high refractive index layer. The door handle obtained in JP-A No. 2013-214844 is thereby glossy, and has an antenna that is not visible from the outside.

In recent years, vehicles that are installed with various types of driving assist systems to assist safe vehicle driving are increasing in number. Driving assist systems, for example, user radar devices to emit electromagnetic waves such as millimeter band electromagnetic waves forward of a vehicle, and to probe in front of the vehicle. Radar devices emit electromagnetic waves forward of the vehicle and receive the electromagnetic waves reflected by target objects in front of the vehicle. The radar devices thereby, for example, detect the distance to a target object, the direction of a target object, the movement speed (relative speed) of a target object, and the like. In a vehicle provided with such a radar device, for example, a component having electromagnetic wave transmittance is provided to a front grill or the like of a vehicle front section, so as to seal electromagnetic wave irradiation ports and the like, and to conceal the radar device provided in the vehicle interior or the antenna of the radar device.

Hence, a cover member described in JP-A No. 2012-107913 has a transparent first optical medium and a second optical medium having a refractive index lower than that of the first optical medium disposed on a face of first optical member at a radar device side of the first optical medium and disposed on a millimeter wave propagation path. A fine structure portion formed on the back face of the first optical medium contacts the second optical medium. Thereby, in the cover member in JP-A No. 2012-107913, some of the light incident to the first optical member from the vehicle outside is totally reflected by the fine structure portion so as to impart gloss-like styling, and so as also to make the internal radar device not visible from the vehicle outside.

However, a high degree of styling is obtained by giving a three dimensional profile formed with indentations and protrusions and the like to an electromagnetic wave transmitting component. Hence, in order to obtain a three dimensional metallic design, there is a proposal described in JP-A No. 2010-188987 a vehicle external member in which a design platform portion is formed on the front face of a base employing an electromagnetic wave transmissive material. The design platform portion is formed on the opposite side of the base to a radar device and projects from the base. A light reflecting layer made from an alloy of silicon and a metal is also provided on the front face of the design platform portion.

Moreover, there is a proposal described in JP-A No. 2010-230661 for a vehicle radar device cover in which, when styling by forming a three dimensional profile provided with indentations and protrusions in a dielectric sheet, a thickness of a first portion formed at an angle to a wavefront of electromagnetic waves is made thinner than the thickness of other portions. Thus, in JP-A No. 2010-230661, disturbance to the directionality of the radar is suppressed.

SUMMARY OF INVENTION

Technical Problem

However, although a dielectric that is an electrical insulator may employ a material having electromagnetic wave transmittance, the permittivity is higher than air, and refraction occurs in electromagnetic waves when they are transmitted through the dielectric. The refraction of electromagnetic waves transmitted through the dielectric is greater the higher the frequency of the electromagnetic waves, and is greater the higher the relative permittivity of the dielectric.

Thus, in JP-A No. 2010-188987, disturbance occurs in the directionality of the transmitted electromagnetic waves the higher the frequency of the electromagnetic waves. Moreover, in JP-A No. 2010-230661, although disturbance in directionality from refraction is prevented by the way in which a dielectric sheet is employed, due to the thickness of the first portion being thinner than other second portions, the load withstanding ability along the propagation direction of the electromagnetic waves is low.

In light of the above circumstances, an object of the present invention is to provide an electromagnetic wave transmitting component in which three dimensional styling with an indented and protruding profile is obtainable without lowering the transmission efficiency of electromagnetic waves.

Solution to Problem

In order to achieve the above object, a first aspect of the present disclosure is an electromagnetic wave transmitting component including an electromagnetic wave transmitting unit, a covering sheet, and a frame. The electromagnetic wave transmitting unit includes a base plate section and a protruding section. The base plate section is formed in a flat plate shape by arraying plural individual adjacent first tubes formed from a dielectric and having a first length, the first tubes being arrayed such that walls of adjacent portions of mutually adjacent of the first tubes are common between the adjacent first tubes, and such that the respective open ends of the first tubes are in-plane. The protruding section is joined to the base plate section so as to project from a front face of the base plate section in a predetermined planar shape, the protruding section being formed by arraying plural individual adjacent second tubes formed from another dielectric and having a length that is longer than the first length, the second tubes being arrayed such that walls of adjacent portions of mutually adjacent of the second tubes are common between the adjacent second tubes, and such that the respective open ends of the second tubes form the predetermined planar shape. The covering sheet covers the electromagnetic wave transmitting unit by covering a side face of the protruding section and by sealing open ends of the second tubes at a projection side of the protruding section and open ends of the first tubes at a face on a side of the base plate section from which the protruding section projects. The frame houses the electromagnetic wave transmitting unit and one opening end of the frame is sealed by a face of the base plate section on the opposite side of the base plate section to the protruding section.

According to the first aspect of the present disclosure, the base plate section is formed using a structure arrayed with the plural first tubes, and the protruding section is formed with the planar shape having the predetermined shape using a structure arrayed with the plural second tubes. The second tubes forming the protruding section may have an opening size and an opening shape that are the same as those of the first tubes, or different therefrom.

The electromagnetic wave transmitting unit has a permittivity equivalent to air due to the interior of the first tubes and the second tubes being hollow. Namely, cavities are formed having a permittivity equivalent to air. Moreover, in the electromagnetic wave transmitting unit, the load withstanding ability is raised along the height direction of the protruding section due to forming the electromagnetic wave transmitting unit with a structure arrayed with plural tubes, and the electromagnetic wave transmitting unit is protected by the frame from load along directions intersecting with the height direction of the protruding section due to housing the electromagnetic wave transmitting unit in the frame.

Thus, by disposing the electromagnetic wave transmitting component of the first aspect of the present disclosure on the propagation path of electromagnetic waves of a radar device, and due to the electromagnetic waves incident to the electromagnetic wave transmitting unit passing through the inside of the first tubes or the second tubes, a decrease in the transmission efficiency of electromagnetic waves is suppressed, and also disturbance in the directionality of electromagnetic waves is prevented from occurring. The walls of the first tubes and the walls of the second tubes forming the electromagnetic wave transmitting unit in this manner are preferably formed with a thickness of 1/20th of the wavelength of the electromagnetic waves or less so as not to affect the refraction and the transmission amount of the electromagnetic waves.

In a second aspect of the present disclosure, the second tubes may each be formed by a single tube or by connecting plural tubes together. Moreover, for the second tubes forming the protruding section, the spaces thereof may be continuous in the height direction, or may be connected through a thin film of a range that does not affect propagation of the electromagnetic waves.

In a third aspect of the present disclosure, the second tubes are formed from the first tubes forming the base plate section and from third tubes having a size of open ends smaller than that of the first tubes and having a length that is the length of a projection height of the protruding section. The protruding section is also formed by arraying plural individual adjacent third tubes arrayed such that walls of adjacent portions of mutually adjacent of the third tubes are common to the adjacent third tubes, and such that respective open ends of the third tubes form the predetermined planar shape. The protruding section is also joined to the base plate section formed by the first tubes through a reinforcement sheet covering open ends of the protruding section on the base plate section side so as to reinforce the third tubes.

According to the third aspect of the present disclosure, the second tubes forming the protruding section form cavities for the electromagnetic waves to propagate through by the first tubes and third tubes having a size of open ends smaller than that of the first tubes. Namely, due to superimposing the first tubes and the third tubes having a size of open ends smaller than that of the first tubes, a propagation path for electromagnetic waves is formed between the first tubes and the third tubes with a permittivity equivalent to air by at least a portion of their respective open ends being superimposed on each other. This thereby enables electromagnetic waves to be transmitted with good efficiency.

Moreover, the load withstanding ability of the protruding section is raised by making the size smaller for the open ends of the third tubes forming the protruding section projecting from the base plate section. The strength can be raised in the protruding section height direction by forming the protruding section with high load withstanding ability. Note that for the size of the open ends, the opening area (the opening cross-sectional area of the third tubes) or the opening width, this being the separation between mutually opposing walls, may be employed. Namely, the third tubes may have a narrower opening width or may have a smaller opening area than the first tubes.

A fourth aspect of the present disclosure includes a reinforcement sheet covering a face on the opposite side to the side of the base plate section from which the protruding section projects and reinforcing the base plate section. According to the fourth aspect of the present disclosure, the open ends of the tubes forming the electromagnetic wave transmitting unit are formed with closed cross-sections by being sealed with the covering sheet and the reinforcement sheet, respectively. The electromagnetic wave transmitting unit thereby has raised strength along directions intersecting with the height direction of the tubes.

In a fifth aspect of the present disclosure, a dielectric including plural internal cavities is filled between a periphery of the base plate section and the frame, and between a periphery of the protruding section and the covering sheet covering the protruding section.

According to the fifth aspect of the present disclosure, for some of the first tubes or the second tubes at a peripheral edge portion, walls are cut away to make open tubes when the base plate section and the protruding section are made to have a specific shape. The dielectric including plural internal cavities is filled in the open first tubes or between the respective walls of the second tubes, thereby enabling the base plate section to be adhered to the frame while suppressing the relative permittivity of the electromagnetic wave transmitting component from being raised, and also enabling unevenness to be prevented from appearing in the covering sheet covering the protruding section.

In a sixth aspect of the present disclosure, for a predetermined wavelength $\lambda$ of electromagnetic waves in air: h1 = $(\lambda \cdot n)/2$, wherein h1 is the height of the first tubes in the base plate section and n is a positive integer; and h2 = $(\lambda \cdot n)/2$, wherein height h2 is the height that the second tubes in the protruding section project from the base plate section and n is a positive integer.

According to the sixth aspect of the present disclosure, for the electromagnetic waves of predetermined wavelength $\lambda$, the phases are matched for the electromagnetic waves emitted from the electromagnetic wave transmitting unit after being reflected in the interior of the electromagnetic wave transmitting unit and the electromagnetic waves transmitted without being reflected by the interior of the electromagnetic wave transmitting unit. In the electromagnetic wave transmitting unit, the amount of the electromagnetic waves transmitted is suppressed from decreasing by matching the phases of the electromagnetic waves emitted.

A seventh aspect of the present disclosure includes a transparent protection cover that seals another opening of the frame. The electromagnetic wave transmitting unit achieves protection of the protruding section by being covered with the protection cover.

However, an eighth aspect of the present disclosure is an electromagnetic wave transmitting component including an electromagnetic wave transmitting unit, a covering sheet, a frame, and a protection cover. The electromagnetic wave transmitting unit includes a base plate section formed in a flat plate shape with a specific planar shape by a dielectric including plural internal cavities, and a protruding section formed with a predetermined planar shape projecting from one surface of the base plate section by a dielectric including plural internal cavities. The covering sheet covers the electromagnetic wave transmitting unit by covering a side face of the protruding section, and covering a projected front face of the protruding section and a front face of the base plate section on the protruding section side. The frame houses the electromagnetic wave transmitting unit, and has one opening that is sealed by a face of the base plate section on the opposite side of the base plate section to the protruding section. The protection cover is transparent and seals another opening of the frame.

According to the eighth aspect of the present disclosure, the relative permittivity of the electromagnetic wave transmitting unit is lowered by forming the electromagnetic wave transmitting unit with a dielectric formed with cavities, raising the transmission efficiency of electromagnetic waves. Moreover, the electromagnetic wave transmitting unit formed with the dielectric formed with plural cavities is protected by providing the frame and the protection cover.

Thus, by disposing the electromagnetic wave transmitting component of the eighth aspect of the present disclosure on the propagation path of electromagnetic waves of a radar device, due to the electromagnetic waves incident to the electromagnetic wave transmitting unit passing through the inside of the tubes of the structural body, a decrease in the transmission efficiency of electromagnetic waves is suppressed, and also disturbance in the directionality of electromagnetic waves is prevented from occurring. Note that the cavities may be open cells or closed cells formed inside the dielectric by foam molding the dielectric, or the cavities may be spaces formed inside the dielectric, such as by tubes.

In a ninth aspect of the present disclosure, for a predetermined wavelength $\lambda g$ of electromagnetic waves propagating through the dielectric including plural internal cavities: h1 = $(\lambda g \cdot n)/2$, wherein h1 is the height of the base plate section along a projection direction of the protruding section from the base plate section, and n is a positive integer; and h2 = (λg·n)/2, wherein h2 is the height of the protruding section along the projection direction from the base plate section, and n is a positive integer.

According to the ninth aspect of the present disclosure, for the electromagnetic waves of predetermined wavelength, the phases are matched for the electromagnetic waves emitted from the electromagnetic wave transmitting unit after being reflected in the interior of the electromagnetic wave transmitting unit and the electromagnetic waves transmitted without being reflected inside the electromagnetic wave transmitting unit. Namely, the wavelength λg of electromagnetic waves propagating inside the dielectric changes from the wavelength of electromagnetic waves in air according to the relative permittivity, and the phase of the electromagnetic waves emitted from the dielectric changes according to the wavelength λg of the electromagnetic waves and the propagation distance inside the dielectric.

The height h1 of the base plate section and the height h2 of the protruding section are accordingly defined to give a propagation distance inside the dielectric of electromagnetic waves emitted after being reflected inside the dielectric and a propagation distance of electromagnetic waves emitted without being reflected inside the dielectric such that the phases of the respective electromagnetic waves match each other. This suppresses the transmitted amount of the electromagnetic waves passing through the electromagnetic wave transmitting unit from decreasing.

In a tenth aspect of the present disclosure, at least a portion of the protruding section abuts the protection cover and supports the protection cover. The protection cover is preferably thin in thickness along the propagation direction when the transmittance to electromagnetic waves is considered, and warping and vibration is thus liable to occur. However, in the tenth aspect of the present disclosure, the protruding section of the electromagnetic wave transmitting unit abuts and supports the protection cover such that they mutual reinforce each other, suppressing warping and vibration of the protection cover from occurring.

In an eleventh aspect of the present disclosure, a surface of the covering sheet corresponding to an upper face and side face of the protruding section is colored by metal vapor deposition, and a surface of the covering sheet corresponding to base plate section is colored a specific color. An electromagnetic wave transmitting component having a high degree of styling is obtained by coloring the covering sheet.

Advantageous Effects

According to the present invention as described above, the advantageous effects are exhibited of suppressing a lowering of the transmission efficiency of electromagnetic waves, raising the load withstanding ability, and obtaining an electromagnetic wave transmitting component having a high degree of styling.

BRIEF DESCRIPTION OF DRAWINGS

Fig. 1 is a schematic configuration diagram illustrating an electromagnetic wave transmitting component according to a first exemplary embodiment and a radar device.

Fig. 2 is a schematic cross-section of relevant portions of an electromagnetic wave transmitting component taken along line 2-2 of Fig. 1.

Fig. 3A is a schematic perspective view of relevant portions illustrating an example of a design member according to the first exemplary embodiment, and illustrating a state covered in a covering film.

Fig. 3B is a schematic perspective view of relevant portions illustrating an example of a design member according to the first exemplary embodiment, and illustrating a state prior to covering.

Fig. 4A is a schematic perspective view illustrating a tube.

Fig. 4B is a schematic cross-section of a tube.

Fig. 4C is a schematic diagram of relevant portions of a design member according to the first exemplary embodiment.

Fig. 5 is a schematic cross-section of relevant portions of an electromagnetic wave transmitting component according to a second exemplary embodiment.

Fig. 6A is a schematic perspective view of relevant portions illustrating an example of a design member according to the second exemplary embodiment, and illustrating a state covered in a covering film.

Fig. 6B is a schematic perspective view of relevant portions illustrating an example of a design member according to the second exemplary embodiment, and illustrating a state prior to covering.

Fig. 7 is a schematic diagram of relevant portions of a design member according to the second exemplary embodiment.

Fig. 8 is a schematic cross-section of relevant portions of an electromagnetic wave transmitting component according to a third exemplary embodiment.

Fig. 9 is a schematic diagram illustrating a schematic cross-section of relevant portions of a design member according to the third exemplary embodiment.

DESCRIPTION OF EMBODIMENTS

A detailed description follows regarding examples of exemplary embodiments of the present invention, with reference to the drawings. Note that in the following description, as an example, a case is described in which an electromagnetic wave transmitting component is provided to a vehicle.

First Exemplary Embodiment

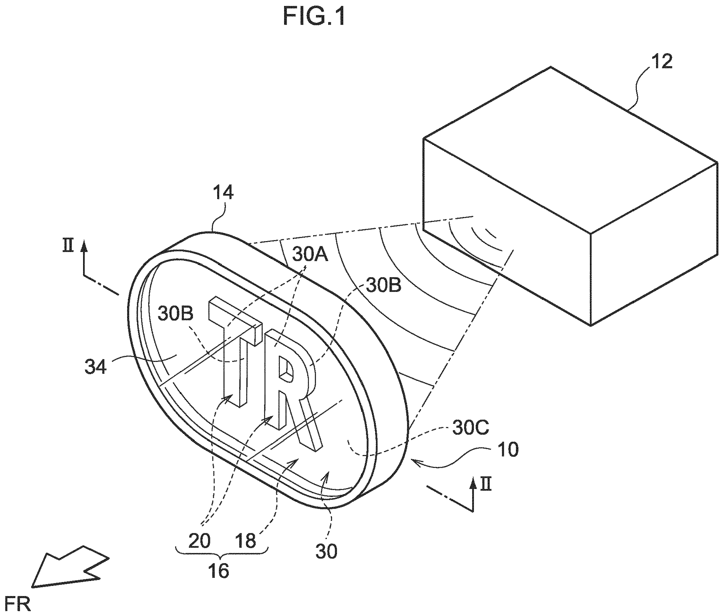

Fig. 1 illustrates an electromagnetic wave transmitting component 10 according to a first exemplary embodiment, and a radar device 12. The radar device 12 is provided at a front section of a vehicle, not illustrated in the drawings, and, for example, emits electromagnetic waves at a predetermined frequency in the vehicle forward direction. The radar device 12 employs, for example, electromagnetic waves having a frequency of 76 GHz (frequency f = 76 GHz, wavelength in air $\lambda \approx 3.9$ mm) in the frequency band referred to as the millimeter wave band (30 GHz to 300 GHz). Note that in the following description, an example is described of electromagnetic waves having a wavelength $\lambda$ in air of $\lambda = 3.9$ mm.
The radar device 12, for example, receives electromagnetic waves that have been emitted forward from the vehicle and reflected by a target object, and acquires vehicle forward information such as distance to a target object, relative speed of a target object, and distance to a target object and direction to a target object, by analyzing the received electromagnetic waves. Moreover, the radar device is, for example, connected to a driving assist system or the like provided to a vehicle, and is used to notify an occupant of vehicle forward information and is used for various types of driving control and the like of the vehicle according to the vehicle forward information.
Note that known configurations may be applied for the radar device 12 and the driving assist system using the radar device 12, and explanation thereof is omitted below. Moreover, in the following, the arrow FR indicates the front side of a vehicle, not illustrated in the drawings, and the radar device 12 described is configured to emit electromagnetic waves from an antenna, not illustrated in the drawings, in the vehicle forward direction. Moreover, the radar device 12 is configured to emit electromagnetic waves over a predetermined angular range, with the center of the electromagnetic wave emission range referred to as the emission direction. Moreover, in the following description, as an example, the vehicle forward (arrow FR direction) is the electromagnetic waves emission direction, and the electromagnetic wave propagation path is along the electromagnetic waves emission direction.
The vehicle provided with the radar device 12 has, for example, an opening formed in a front grill for the electromagnetic waves emitted from the radar device 12 to pass through. The electromagnetic wave transmitting component 10 is disposed on the propagation path of electromagnetic waves from the radar device 12 by being attached so as to seal the opening formed in the front grill for electromagnetic waves to pass through. The electromagnetic wave transmitting component 10 functions as a concealing component to conceal the radar device 12 provided inside the vehicle by being attached so as to seal the opening in the front grill. Moreover, the electromagnetic wave transmitting component 10 also functions as a design component by being attached to the front grill of the vehicle or the like.

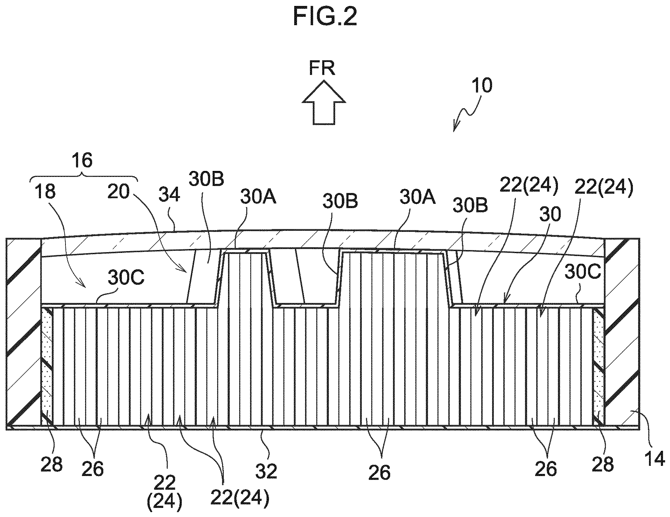

Fig. 2 is a cross-section illustrating relevant portions of the electromagnetic wave transmitting component 10 according to the first exemplary embodiment. As illustrated in Fig. 1 and Fig. 2, the electromagnetic wave transmitting component 10 includes a frame 14. The frame 14 is, for example, formed from a resin or metal in a tube shape having a specific thickness. The electromagnetic wave transmitting component 10 is attached to the vehicle such that the opening of the frame 14 faces along the vehicle front-rear direction. The electromagnetic waves emitted from the radar device 12 are transmitted through the inside of the frame 14. In the first exemplary embodiment, as an example, the frame 14 employed is formed with an elliptical cross-sectional profile. Note that any freely selected shape may be employed as the cross-sectional profile of the frame 14 according to the design formed by the electromagnetic wave transmitting component 10. Moreover, the size (cross-sectional dimensions) of the frame 14 is of a size that corresponds to the emission range of the electromagnetic waves being transmitted from the radar device 12 to outside the vehicle.
As illustrated in Fig. 2, a design member 16 is provided at the inside of the frame 14. The design member 16 is formed by an in-plane base plate section 18 having an external shape corresponding to the internal shape of the frame 14, and protruding sections 20 projecting from one face of the base plate section 18. The design member 16 of the first exemplary embodiment functions as an example of an electromagnetic wave transmitting section, the base plate section 18 functions as an example of a base plate section, and the protruding sections 20 function as examples of a protruding section. Note that in the following description, the axial direction of the frame 14 is described as being the height direction of the frame 14, and the projection direction of the protruding sections 20 of the design member 16 is described as being the height direction of the design member.
When the electromagnetic wave transmitting component 10 has been attached to the vehicle, the design member 16 is disposed such that the height direction of the design member 16 is along the height direction of the frame 14, and such that the base plate section 18 intersects with the propagation direction. The design member 16 is also attached to the frame 14 such that the protruding sections 20 face toward the vehicle front, this being the opposite direction to the radar device 12. Namely, as an example, the electromagnetic wave transmitting component 10 is attached such that the height direction of the design member 16 is along the vehicle front-rear direction, and the protruding sections 20 face in front of the vehicle.

The design member 16 is housed in the frame 14 such that the base plate section 18 is disposed sealing an end portion of the frame 14 on the radar device 12 side of the frame 14 (the opposite side to the vehicle forward direction). Moreover, the height of the frame 14 is higher than the height of the design member 16. Thereby, by attaching the design member 16 so as to be housed inside the frame 14, the design member 16 is protected by the frame 14 from load (external force) from outside the frame 14 (the design member 16 crosswise direction).

As illustrated in Fig. 1, as an example of the protruding sections 20 formed to the design member 16, as viewed face-on from the vehicle front, various characters, graphics, patterns, logos, or the like are employed so as to form a predetermined three dimensional design. The electromagnetic wave transmitting component 10 functions as what is referred to as an emblem, by forming the protruding sections 20 into a predetermined shape enabling the manufacturer of the vehicle, the vehicle type, the vehicle class, or the like to be identified.

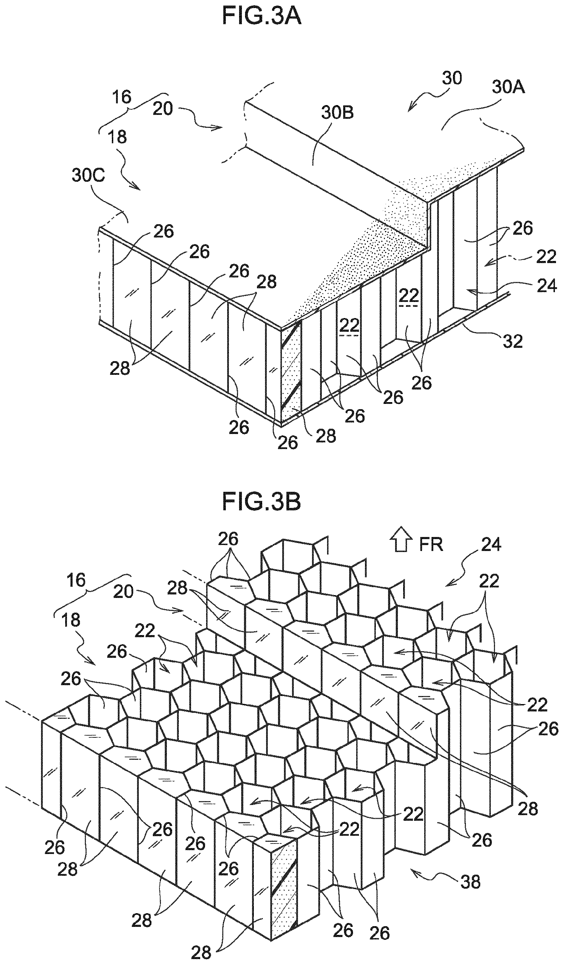

Fig. 3A and Fig. 3B illustrate relevant portions of the design member 16 according to the first exemplary embodiment. As illustrated in Fig. 3B, the base plate section 18 and the protruding sections 20 of the design member 16 employ, for example, a honeycomb structural body 24 with a shape arrayed with plural hexagonal tubes 22. In the first exemplary embodiment, the base plate section 18 and the protruding sections 20 are formed using the honeycomb structural body 24. In the first exemplary embodiment, the tubes 22 that are continuous from the base plate section 18 to the protruding sections 20 function as an example of second tubes. Moreover, in the first exemplary embodiment, the tubes 22 that form the base plate section 18 at the periphery of the protruding sections 20 function as an example of first tubes. Note that although the first exemplary embodiment, as an example, has a shape arrayed with the tubes 22 have hexagonal profiles, there is no limitation thereto, and a shape arrayed with tubes having any polygonal shape of three or more sides may be employed.

In the honeycomb structural body 24, the hexagonal profile tubes 22 are formed with walls 26 formed from a dielectric partitioning between mutually adjacent tubes 22. Namely, the honeycomb structural body 24 has a shape arrayed with plural tubes 22 such that opening ends of the tubes 22 formed from a dielectric are in-plane. The walls 26 forming the tubes 22 may, for example, employ a synthetic resin such as polycarbonate or polyethylene as the dielectric, and may, for example, be formed in a film shape having a thickness of 100 $\mu$m or less so as to be 1/20th of the wavelength $\lambda$ of the electromagnetic waves or less. Note that the walls 26 are preferably, for example, for the wavelength $\lambda$, a thickness of $\lambda$/20 or less.

The base plate section 18 is formed in a flat, plate shape in which the tubes 22 respectively open onto its front face. Moreover, the protruding sections 20 are formed with the tubes 22 respectively opening onto their front faces, and the planar shape as viewed from the opening direction side of the tubes 22 and the projection height of the protruding sections 20 being defined based on the design formed in the electromagnetic wave transmitting component 10. As illustrated in Fig. 3B, the base plate section 18 and the protruding sections 20 are formed such that the tubes 22 are continuous. In the design member 16, the base plate section 18 and the protruding sections 20 may, for example, be integrally formed by machining a predetermined sized block of the honeycomb structural body 24. However, the design member 16, for example, may employ two blocks of the honeycomb structural body 24. In this method, the design member 16 may be formed by producing the base plate section 18 from one of the blocks of the honeycomb structural body 24, producing the protruding sections 20 from the other of the blocks of the honeycomb structural body 24, and then bonding the protruding sections 20 to the base plate section 18 such that openings of the tubes 22 in the base plate section 18 and the openings of the tubes 22 in the protruding sections 20 are superimposed on each other.

As illustrated in Fig. 2, in the design member 16, the base plate section 18 and the protruding sections 20 are attached to the frame 14 such that the respective openings of the tubes 22 are facing in the electromagnetic waves emission direction (the arrow FR direction). Namely, the design member 16 is attached such that the height direction of the tubes 22 is along the electromagnetic waves emission direction, and the crosswise direction of the in-plane base plate section 18 is along a direction that intersects the vehicle front-rear direction.

As illustrated in Fig. 3B, in the design member 16, when the honeycomb structural body 24 is cut to match the inner face shape of the frame 14, spaces (voids) are formed between the design member 16 and the frame 14 due to removing the walls 26 of some of the tubes 22. Moreover, in the design member 16, when the protruding sections 20 are formed by the honeycomb structural body 24, the tubes 22 are opened by removing the walls 26 of some of the tubes 22 at the peripheral edges of the protruding sections 20.

The honeycomb structural body 24 is filled by a filler 28 that employs a multi-pore dielectric such as expanded polystyrene or expanded polyethylene so as to fill the voids between the honeycomb structural body 24 and the frame 14, and spaces formed by the open tubes 22 at the peripheral edges of the protruding sections 20. The filler 28 in the first exemplary embodiment functions as an example of a dielectric including plural internal cavities. The filler 28 is, for example, preferably a multi-pore dielectric having a porosity of 90% or more and, for example, expanded polystyrene or expanded polyethylene having a porosity of 90% or more is employed therefor.

As illustrated in Fig. 2, the front face of the design member 16 is tightly covered by a covering film 30. The covering film 30 in the first exemplary embodiment functions as an example of a covering sheet. The covering film 30 covers the surface of the design member 16 formed using the honeycomb structural body 24 (the open ends of the tubes 22 on a front face 18A side of the base plate section 18, the open ends of the tubes 22 on a front face 20A side of the protruding sections 20, and the tubes 22 open on side face 20B sides of the protruding sections 20) so as to make the front face of the design member 16 a smooth face without fine indentations and protrusions. Note that the protruding sections 20 may be formed such that the side faces 20B are along the height direction, or may be formed such that the side faces 20B are inclined to the height direction so as to give trapezoidal cross-sectional profiles.

The design member 16 has the openings of the tubes 22 at the vehicle front side sealed by the covering film 30 being stuck thereto. Moreover, in the design member 16, a region 30B of the covering film 30 is not wavy due to filling with the filler 28 so as to fill the spaces inside the open tubes 22 at the periphery of the protruding sections 20. The design member 16 thereby achieves improved styling using the honeycomb structural body 24.

Moreover, the base plate section 18 of the design member 16 has a reinforcement film 32 stuck to a face of the base plate section 18 on the opposite side to the protruding sections 20 (the back face, the face toward the bottom of the page in Fig. 3B). The reinforcement film 32 in the first exemplary embodiment functions as an example of a reinforcement sheet. The reinforcement film 32 is, for example, stuck to the base plate section 18 so as to be bonded to the lower ends of the walls 26 formed in the honeycomb structural body 24.

In the honeycomb structural body 24, although a high strength is obtained in the height direction, the honeycomb structural body 24 has low strength and is liable to be crushed in the crosswise direction intersecting the height direction. In the design member 16, the walls 26 of the honeycomb structural body 24 are respectively connected together using the covering film 30 and the reinforcement film 32, such that the tubes 22 are formed with closed cross-sections. Due to forming closed cross-sections for each of the tubes 22 of the honeycomb structural body 24, the load withstanding force of the design member 16 is raised in directions intersecting with the height direction of the base plate section 18 and the protruding sections 20 (crosswise directions).

Generally, in a dielectric, it is thought that the transmittance of electromagnetic waves can be ignored in practice as long as the thickness of the dielectric is $1/20^{th}$ the wavelength $\lambda$ or less. Thus, for example, a synthetic resin such as polycarbonate or polyethylene is employed for the covering film 30 and the reinforcement film 32, and the synthetic resin is formed into a sheet having a thickness of 100 $\mu$m (= 0.1 mm) so as to be $1/20^{th}$ of, or less than, the wavelength $\lambda$ of electromagnetic waves = 3.9 mm.

The covering film 30 has, for example, regions 30A corresponding to the front faces 20A of the protruding sections 20 and regions 30B corresponding to the side faces 20B of the protruding sections 20 where a metal vapor deposition film is formed by vapor deposition of a metal material such as indium. The metal vapor deposition film has, for example, a thickness of from 0.01 $\mu$m to 10 $\mu$m. Due to the thin film being formed with fine particles, the metal vapor deposition film has a structure that transmits electromagnetic wave through the gaps between the metal particles.

Moreover, the covering film 30 has regions 30C corresponding to the front faces 18A of the base plate section 18 that are colored by coating in a colored coating (pigment) having a non-metallic color, such as black, red, blue, or the like. The coloring of the covering film 30 may, for example, be formed by applying a method such as color coating the regions 30C, or metal coating (metal vapor deposition) on the regions 30A, 30B in a state in which color coating portions are masked.

Thus, in the design member 16, by bonding the covering film 30, the base plate section 18 is color coated and the protruding sections 20 are decorated in a metal vapor deposition film, achieving improved styling of the design member 16. Namely, the design member 16 is decorated by covering a framework structure formed from a dielectric with the covering film 30, obtaining a high degree of styling.

As illustrated in Fig. 1 and Fig. 2, in the electromagnetic wave transmitting component 10 according to the first exemplary embodiment, for example, a protection cover 34 is attached to a vehicle front side end portion of the frame 14. The protection cover 34 in the first exemplary embodiment functions as an example of a protection cover. The protection cover 34 employs, for example, a transparent dielectric such as transparent glass or a transparent resin.

Moreover, the protection cover 34, for example, is attached so as to fit inside the opening at the vehicle front side of the frame 14. Thereby, in the electromagnetic wave transmitting component 10, the frame 14 is sealed by the protection cover 34 on the side of the protruding sections 20 of the design member 16. In the electromagnetic wave transmitting component 10 according to the first exemplary embodiment, the design member 16 is formed with a high load withstanding ability due to using the honeycomb structural body 24, and so the protection cover 34 may be omitted. The electromagnetic wave transmitting component 10 has the frame 14 sealed by the protection cover 34, preventing the adhering of dirt or the like to the design member 16, and so the design face of the design member 16 is visible from the vehicle front side in a protected state.

In the electromagnetic wave transmitting component 10, electromagnetic waves emitted from the radar device 12 are transmitted through the design member 16, and the electromagnetic waves that have been transmitted through the design member 16 are further transmitted on through the protection cover 34, and are emitted forward of the vehicle. The protection cover 34 is formed with a defined thickness and curved state of front and back faces such that electromagnetic waves that have been transmitted through the design member 16 are emitted toward a specific range in front of the vehicle. Note that the protection cover 3 may be formed with a thickness and curved state of front and back faces defined in consideration of, for example, relative permittivity $\varepsilon r$, refraction, interface reflection of electromagnetic waves, and loss tangent ($\tan \delta$) of the material of the protection cover 34. Moreover, the protection cover 34 may be formed using foamed glass or foamed resin as long as it is transparent.

When such a protection cover 34 is provided, preferably the leading ends of the protruding sections 20 of the design member 16 housed inside the frame 14 (the front faces 20A decorated by metal vapor deposition) abut and adhere to the protection cover 34. Doing so results in the protection cover 34 being supported by the protruding sections 20 of the design member 16, preventing warping from occurring, and suppressing the generation of vibration. Note that although an example has been given of the first exemplary embodiment in which the entire area of the front faces 20A of the protruding sections 20 abuts the protection cover 34, a configuration may be adopted in which at least a portion of the front faces 20A of the protruding sections 20 abuts the protection cover 34.

In the thus configured electromagnetic wave transmitting component 10, due to being placed on the propagation path of electromagnetic waves of the radar device 12, the electromagnetic waves from the radar device 12 are emitted to the inside of the frame 14, are transmitted through the design member 16 and the protection cover 34, and are emitted forward of the vehicle.

However, in the electromagnetic wave transmitting component 10, the base plate section 18 and the protruding sections 20 of the design member 16 are formed using the honeycomb structural body 24 arrayed with plural tubes 22, with each of the tubes 22 disposed with openings along the emission direction of the electromagnetic waves, such that a layer of air is formed through which the electromagnetic wave are transmitted. Moreover, the design member 16 has a thickness of walls 26 forming the honeycomb structural body 24 that is a thickness that does not affect the transmittance of electromagnetic waves (for example, 1/20th of the wavelength $\lambda$ of the electromagnetic waves or less), and so changes to the directionality of the electromagnetic waves are suppressed from occurring even when the electromagnetic waves are transmitted through the walls 26.

Thus, in the electromagnetic wave transmitting component 10, by forming the design member 16 with a three dimensional profile provided with indentations and protrusions using the honeycomb structural body 24, refraction of electromagnetic waves is suppressed, and disturbance can be prevented from occurring in the directionality of the electromagnetic waves.

Moreover, the design member 16 has the covering film 30 forming the design face in a state supported by the honeycomb structural body 24. Thus, in the design member 16, the design face formed using the covering film 30 has improved load withstanding ability to load input from the vehicle front side. Thus, due to the design member 16 being formed using the honeycomb structural body 24, the electromagnetic wave transmitting component 10 may have a configuration lacking the protection cover 34.

Moreover, due the electromagnetic wave transmitting component 10 being provided with the protection cover 34, a deterioration in the styling of the design member 16 caused by dirt or the like can be suppressed. In such cases, in the electromagnetic wave transmitting component 10, the protection cover 34 that seals the frame 14 is supported by the leading ends of the protruding sections 20 of the design member 16, enabling the load withstanding ability of the protection cover 34 to be improved.

However, in the design member 16, although some of the electromagnetic waves are transmitted through the walls 26 of the honeycomb structural body 24, preferably the amount of electromagnetic waves transmitted through the walls 26 is small even though the walls 26 are formed as thin films of a dielectric.

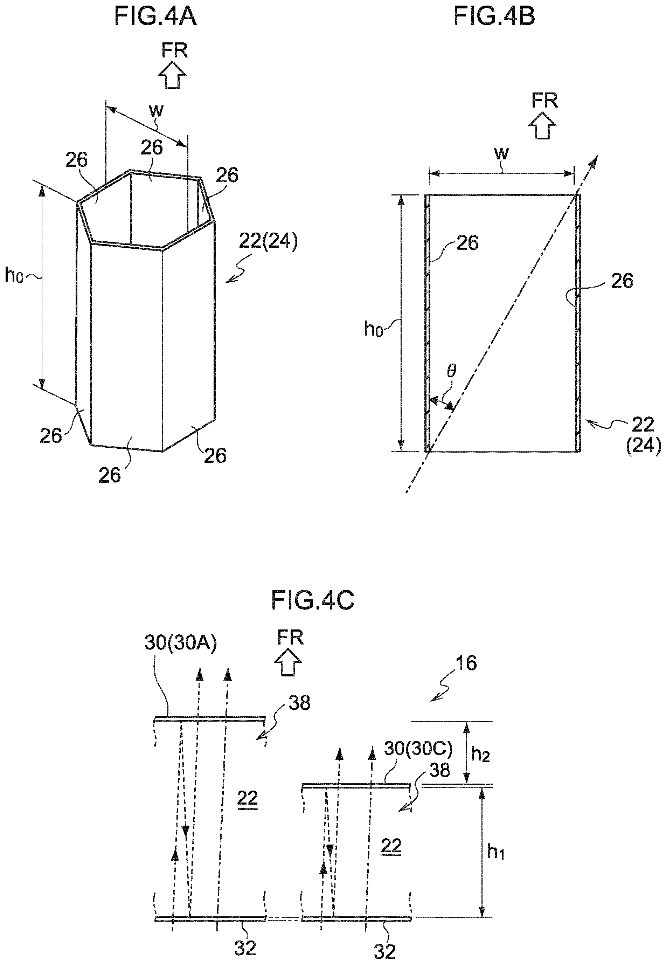

Fig. 4A illustrates a single tube of the tubes 22 forming the honeycomb structural body 24 of the design member 16. Fig. 4B illustrates a schematic cross-section of relevant portions of the tube 22. Moreover, Fig. 4C illustrates a schematic cross-section of tubes 22 respectively forming the base plate section 18 and the protruding sections 20 of the design member 16.

In Fig. 4A and Fig. 4B, h0 is the height of the tubes 22, opening width w of the tubes 22 is the separation between mutually opposing walls 26, and it is assumed that electromagnetic waves are incident at an angle $\theta$ with respect to the height direction of the tube 22. Note that in Fig. 4A and Fig. 4B, the direction of progression (propagation direction) of the electromagnetic waves is illustrated by single dot broken lines.

When the electromagnetic waves incident at the angle $\theta$ pass through the interior (the cavity portions) of the tube 22 without being transmitted through the walls 26, then the relationship between opening width w, height h0, and angle $\theta$ is $w > h0 \cdot \tan \theta$. For example, if $\theta = 30°$ and height h0 = 3 mm, then the opening width w is w > 1.732 mm, and if $\theta = 30°$ and height h0 = 20 mm, then the opening width w is w > 11.54 mm.

Thus, in cases in which the tube 22 has an opening width w = 1.732 mm and height h0 = 3 mm, and in cases in which the tube 22 has an opening width w = 11.54 mm and height h0 = 20 mm, then by making the electromagnetic wave incident up to and including an angle $\theta$ of 30°, the amount of electromagnetic waves that are transmitted through the interior of the tube 22 without being transmitted through the walls 26 is increased compared to cases in which the electromagnetic waves are incident at an angle θ exceeding 30°.

Moreover, the design member 16 has the covering film 30 stuck to the front face side of the honeycomb structural body 24 and the reinforcement film 32 stuck to the back face side of the honeycomb structural body 24. Thereby, in the design member 16, some of the incident electromagnetic waves are reflected at the interfaces of the covering film 30 and the reinforcement film 32, resulting in a reduction in the amount of electromagnetic waves that are transmitted through. Note that in Fig. 4C, the boundary faces of the honeycomb structural body 24 with the covering film 30 and the reinforcement film 32 act as interfaces, and the electromagnetic waves that are transmitted through the design member 16 without being reflected at the respective interfaces are illustrated by the single dot broken lines, and the electromagnetic waves that are transmitted through the covering film 30 after being reflected at the respective interfaces are illustrated by the dashed lines.

In Fig. 4C, h1 is the height of the base plate section 18 (the height of the tubes 22 forming the base plate section 18) and h2 is the height of the protruding sections 20. The honeycomb structural body 24 is formed from the dielectric, and when the honeycomb structural body 24 is taken as being a dielectric having a relative permittivity εr, then from the wavelength λ, of the electromagnetic waves in air and from the relative permittivity εr of the design member 16, the wavelength λg of the electromagnetic waves propagating through the interior of the design member 16 is expressed by $\lambda g = \lambda / \varepsilon r^{1/2}$.

In the electromagnetic waves being transmitted through the design member 16, interference is prevented by making the electromagnetic waves that have been reflected at the respective interfaces at both the front and back sides of the design member 16 and have been transmitted through the covering film 30, and the electromagnetic waves that have been transmitted through the covering film 30 without being reflected at the interfaces of the design member 16, in-phase with each other, suppressing a reduction in the transmitted amount. In order to make the electromagnetic waves that have been transmitted reflected at the respective interfaces at both the front and back side of the design member 16 and the un-reflected electromagnetic waves be emitted in-phase with each other, for wavelength λg, a distance difference d between the propagation distance of the un-reflected electromagnetic waves and the propagation distance of the electromagnetic waves that have been transmitted reflected at the respective interfaces at both the front and back sides of the design member 16, may be set to d = n·λg / 2. Wherein, n = 1, 2, ... (a positive integer). Moreover, for the heights h1, h2 and the distance difference d, h1 = n·d/2, h2 = n·d/2, wherein for heights h1, h2, n may be the same or may be different.

The design member 16 employed in the electromagnetic wave transmitting component 10 has the height h1 of the base plate section 18 and the height h2 of the protruding sections 20 formed based on the wavelength λ of the electromagnetic waves in air, and the relative permittivity εr of the design member 16. Namely, the base plate section 18 is formed with a height h1 that is a value close to:

$$h1 = n \cdot d/2 = n \cdot \lambda/(2 \cdot \varepsilon r^{1/2}) = (n \cdot \lambda g)/2 \qquad (1)$$

Wherein n is a positive integer.

Moreover, when the height h1 of the base plate section 18 is a value close to Equation (1), then the protruding sections 20 are formed with a height h2 that is a value close to:

$$h2 = n \cdot d/2 = n \cdot \lambda/(2 \cdot \varepsilon r^{1/2}) = (n \cdot \lambda g)/2 \qquad (2)$$

Wherein n is a positive integer.

Thereby, a state is achieved in which the electromagnetic waves that have been transmitted through inside the design member 16 without being reflected, and the electromagnetic waves that have been transmitted reflected at the respective interfaces at both the front and back sides of the design member 16, can be taken as being in-phase with each other, and in the electromagnetic wave transmitting component 10, a reduction in the amount of electromagnetic waves being transmitted through the design member 16 is suppressed. Note that being taken as being in-phase with each other means a state in which interference of electromagnetic waves caused by phase difference can be ignored.

However, since the interior of the tubes 22 forming the design member 16 is air, electromagnetic waves of wavelength λ can be taken as passing (propagating) through the inside of the tubes 22. In such cases, the wavelengths of the electromagnetic waves propagating through the inside of the tubes 22 of the honeycomb structural body 24 are a mixture of wavelength λg and wavelength λ. The thickness of each of the tubes 22 (the thickness of the walls 26) is thin, and so the amount thereof is small, and the wavelength can be taken as being the wavelength λ of electromagnetic waves in air. Namely, in the first exemplary embodiment, the permittivity of the design member 16 is made to approach the permittivity of air (the relative permittivity εr is made to approach 1) by employing the honeycomb structural body 24 arrayed with the plural tubes 22.

Thus, the base plate section 18 may be formed with a height h1 of a value close to:

$$h1 = n \cdot d/2 = n \cdot \lambda/2 \qquad\qquad (3)$$

 Wherein n is a positive integer.

Moreover, when the height h1 of the base plate section 18 is a value close to Equation (3), the protruding sections 20 may be formed with a height h2 of a value close to:

$$h2 = n \cdot d/2 = n \cdot \lambda/2 \qquad\qquad (4)$$

Wherein n is a positive integer.

Thereby, the electromagnetic waves that have been transmitted through the design member 16 without being reflected by the covering film 30 and the reinforcement film 32, and the electromagnetic waves that have been transmitted through the covering film 30 from out of the electromagnetic waves reflected by the covering film 30 and the reinforcement film 32, can be taken as being in-phase with each other.

In this manner, a reduction in the amount of electromagnetic waves being transmitted is suppressed in the electromagnetic wave transmitting component 10 that employs the design member 16 having the defined height h1 of the base plate section 18 and the defined height h2 of the protruding sections 20. Moreover, due to the opening width w of each of the tubes 22 of the honeycomb structural body 24 being defined based on the height h1 and the height h2, the electromagnetic wave transmitting component 10 is able to further suppress a reduction in the amount of the electromagnetic waves transmitted. Namely, in order to suppress the influence of the loss tangent (tan δ) of the dielectric forming the design member 16 on the transmittance of electromagnetic waves, the electromagnetic wave transmitting component 10 is configured such that the parts formed by the dielectric, such as the walls 26, have a thickness of 1/20th the wavelength of the electromagnetic waves or less. Moreover, by making the relative permittivity εr of the design member 16 approach 1, the electromagnetic wave transmitting component 10 suppresses refraction of the electromagnetic waves being transmitted by the design member 16.

Note that although in the first exemplary embodiment, the base plate section 18 and the protruding sections 20 are formed with the honeycomb structural body 24 arrayed with tubes 22 of the same size, there is no limitation thereto. For example, a honeycomb structural body may be employed having a size of opening width w of tubes that increases on progression away from the center of the frame 14, namely the nearer to the frame 14. Namely, since the angle θ the electromagnetic waves are incident to the tubes is greater the further away from the center of the design member 16, the design member 16 is formed using the honeycomb structural body having a size of opening width w of tubes that increases as the angle θ increases. The electromagnetic wave transmitting component 10 employing the design member 16 thereby further suppress a reduction in the amount of the electromagnetic waves transmitted.

Moreover, although in the first exemplary embodiment, an example was given in which the thickness of the reinforcement film 32 employed in the design member 16 was 1/20th of the wavelength λ of the electromagnetic waves or less, there is no limitation thereto. A reinforcement sheet may be employed that is formed in the base plate shape with a thickness within a range that does not affect the transmittance of electromagnetic waves. By employing a base plate shaped reinforcement sheet instead of the reinforcement film 32, the electromagnetic wave transmitting component 10 is able to further raise the load withstanding ability in the crosswise direction of the honeycomb structural body 24.

Second Exemplary Embodiment

Explanation follows regarding a second exemplary embodiment. The basic configuration of the second exemplary embodiment is similar to that of the first exemplary embodiment, and so the reference numerals of the first exemplary embodiment are appended to functional components of the second exemplary embodiment that are equivalent to those of the first exemplary embodiment, and explanation is omitted thereof.

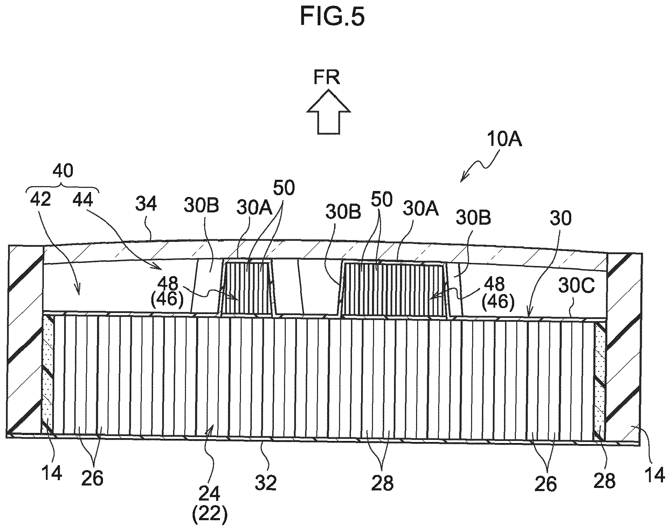

Fig. 5 illustrates a schematic cross-section of relevant portions of an electromagnetic wave transmitting component 10A according to the second exemplary embodiment. In the second exemplary embodiment, a design member 40 is employed instead of the design member 16 according to the first exemplary embodiment. Thus, the electromagnetic wave transmitting component 10A differs from the electromagnetic wave transmitting component 10 in that the design member 40 is employed instead of the design member 16.

The design member 40 is formed with a base plate section 42 corresponding to the base plate section 18 of the design member 16, and with protruding sections 44 corresponding to the protruding sections 20 of the design member 16. In the design member 40, the base plate section 42 and the protruding sections 44 are formed with shapes equivalent to those of the design member 16. In the second exemplary embodiment, the design member 40 functions as an example of an electromagnetic wave transmitting unit, the base plate section 42 functions as an example of a base plate section, and the protruding sections 44 function as examples of protruding sections.

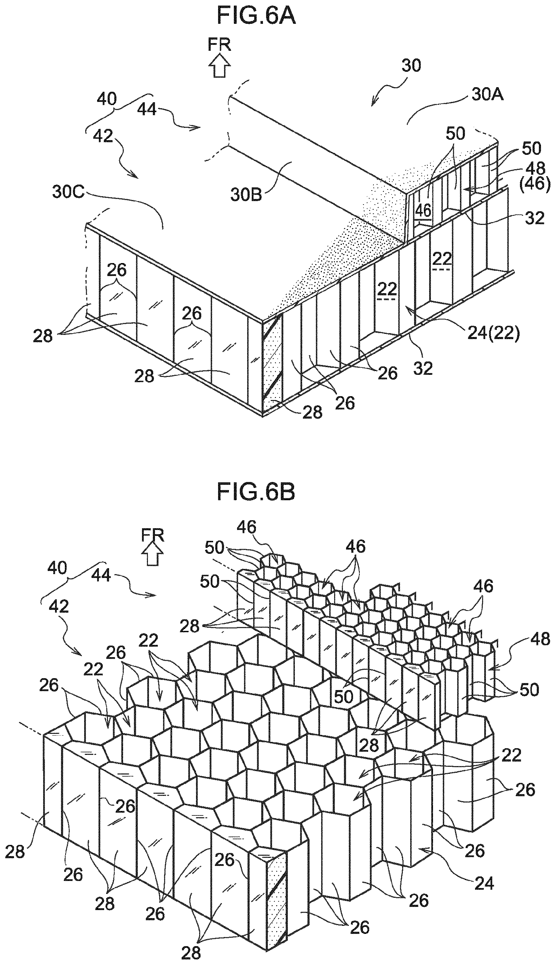

Fig. 6A and Fig. 6B illustrate relevant portions of the design member 40 according to the second exemplary embodiment. As illustrated in Fig. 6B, the design member 40, for example, is formed with an in-plane base plate section 42 employing a honeycomb structural body 24 with a shape arrayed with plural hexagonal profile tubes 22. Moreover, the design member 40, for example, is formed with protruding sections 44 employing a honeycomb structural body 48 with a shape arrayed with plural hexagonal profile tubes 46 with smaller opening width w than that of the tubes 22. In the honeycomb structural body 48, each of the tubes 46 is formed by walls 50 so as to have a hexagonal profile opening cross-section.

In the second exemplary embodiment, the tubes 46 of the honeycomb structural body 48 forming the protruding sections 44 function as examples of third tubes, and the tubes 22 forming the base plate section 42 at the periphery of the protruding sections 44 function as examples of first tubes. Moreover, in the second exemplary embodiment, the tubes 46 of the honeycomb structural body 48 forming the protruding sections 44, and the tubes 22 of the honeycomb structural body 24 to which the protruding sections 44 are joined, function as examples of second tubes. Namely, in the second exemplary embodiment, for example, the second tubes are formed by the tubes 22 and the tubes 46.

Note that although, for example, the second exemplary embodiment has a shape arrayed with the tubes 22, 46 having a hexagonal profile, there is no limitation thereto, and a shape arrayed with tubes having any polygonal shape of three or more sides may be employed. Moreover, although in the second exemplary embodiment, an opening width w representing the separation of the opposing walls 26, 50 is employed as the opening size of the tubes 22, 46, there is no limitation thereto. The radius or diameter of a circle circumscribing the tubes (a circle having an inner face contacted by each of the formed vertices) may be employed therefor, or the opening area (the opening cross-sectional area of the tubes 22, 46) may be employed therefor.

The honeycomb structural body 48 is partitioned by the walls 50 formed by the dielectric between mutually adjacent tubes 46. The walls 50 are, for example, similarly to the walls 26, formed with a thickness that is $1/20^{th}$ the wavelength $\lambda$ of the electromagnetic waves or less. Moreover, in the design member 40, voids between the walls 26 and the frame 14 at the periphery of the honeycomb structural body 24 forming the base plate section 42 are filled with filler 28. Moreover, in the design member 40, the open tubes 46 at the peripheral edges of the honeycomb structural body 48 forming the protruding sections 44 are filled with filler 34.

As illustrated in Fig. 6A, in the design member 40, the reinforcement film 32 is stuck to the face on the base plate section 42 side of the honeycomb structural body 48 forming the protruding sections 44, and the reinforcement film 32 is joined to the honeycomb structural body 24 forming the base plate section 42. Joining of the protruding sections 44 to the base plate section 42 is, for example, preferably by joining such that openings of the tubes 22 of the honeycomb structural body 24 forming the base plate section 42, and openings of the tubes 46 of the honeycomb structural body 48 forming the protruding sections 44, are superimposed on each other.

The reinforcement film 32 is stuck to the back face (the face on the opposite side to the protruding sections 44) of the honeycomb structural body 48 forming the base plate section 42. In the design member 40, the honeycomb structural body 24 forming the base plate section 42 and the honeycomb structural body 48 forming the protruding sections 44 are bonded together through the reinforcement film 32 bonded to the honeycomb structural body 48. Moreover, in the design member 40, the covering film 30 is stuck to the front face of the honeycomb structural body 24, and to the front faces and side faces of the honeycomb structural body 48 (the periphery of the honeycomb structural body 48). Thereby, the design member 40 forms a three dimensional profile similar to that of the design member 16 according to the first exemplary embodiment.

The design member 40 employs the covering film 30 and the reinforcement film 32 to form closed cross-sections for the tubes 46 of the honeycomb structural body 48 forming the protruding sections 44. Moreover, in the design member 40, closed cross-sections are formed by one of the openings of each of the tubes 22 of the honeycomb structural body 24 forming the base plate section 42 being sealed by the reinforcement film 32, and the other opening being sealed by the covering film 30 or the reinforcement film 32 of the honeycomb structural body 48. In the design member 40, due to forming the closed cross-sections of each of the tubes 22 of the honeycomb structural body 24, the load withstanding force in a direction intersecting with the height direction (the crosswise direction) of the base plate section 42 is raised, and due to forming the closed cross-sections of each of the tubes 46 of the honeycomb structural body 48, the load withstanding force in a direction intersecting with the height direction (the crosswise direction) of the protruding sections 44 is raised. Moreover, in the electromagnetic wave transmitting component 10A according to the second exemplary embodiment, for example, a protection cover 34 is attached to the frame 14, and the front faces of the protruding sections 44 abut the protection cover 34.

By disposing the electromagnetic wave transmitting component 10A employing the design member 40 configured in this manner on the propagation path of electromagnetic waves of the radar device 12, the electromagnetic waves from the radar device 12 are emitted onto the design member 40 inside the frame 14. The electromagnetic waves emitted onto the design member 40 are transmitted through the design member 40 and the protection cover 34, and emitted forward of the vehicle.

In the electromagnetic wave transmitting component 10A, the design member 40 is formed with the base plate section 42 made from the honeycomb structural body 24 arrayed with the plural tubes 22, and is formed with the protruding sections 44 made from the honeycomb structural body 48 arrayed with the plural tubes 46. The electromagnetic wave transmitting component 10A thereby suppresses refraction from occurring in the electromagnetic waves being transmitted, and moreover prevents disturbance from occurring in the directionality of the electromagnetic waves.

Moreover, in the design member 40, the protruding sections 44 projecting from the base plate section 42 toward the vehicle front are formed using the honeycomb structural body 48 with a shape arrayed with the plural tubes 46 of smaller opening width than the tubes 22 of the honeycomb structural body 24. The design member 40 thereby has improved load withstanding ability to load from the vehicle front side compared with cases in which the honeycomb structural body 24 are employed in the protruding sections 44 (the design member 16 of the first exemplary embodiment).

Moreover, the design member 40 is protected by providing the protection cover 34 to seal the frame 14 in the electromagnetic wave transmitting component 10A. In the electromagnetic wave transmitting component 10A, the protection cover 34 is supported by the leading ends of the protruding sections 44 employed in the honeycomb structural body 48, further improving the load withstanding ability of the protection cover 34. Note that due to forming the design member 40 employing the honeycomb structural bodies 24, 48, the electromagnetic wave transmitting component 10A may have a configuration lacking the protection cover 34.

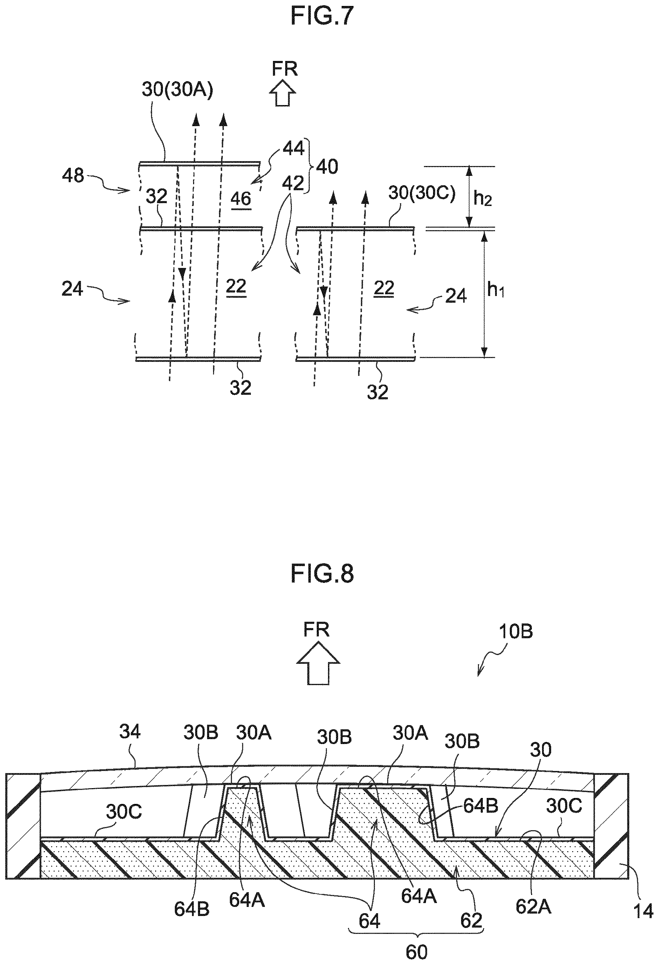

Fig. 7 is a schematic cross-section illustrating relevant portions of the base plate section 42 and the protruding sections 44 of the design member 40. In Fig. 7, h1 is the height of the base plate section 42 (the height of the tubes 22 forming the base plate section 42), and h2 is the height of the protruding sections 44 (the height of the tubes 46 forming the protruding sections 44).

Taking $\varepsilon r$ as the relative permittivity of the design member 40 formed by employing the honeycomb structural bodies 24, 48, then from the wavelength $\lambda$ of electromagnetic waves in air and the relative permittivity $\varepsilon r$, the wavelength $\lambda g$ of the electromagnetic waves propagating through the interior of the design member 40 is expressed by $\lambda g = \lambda/\varepsilon r^{1/2}$.

In order to be able to take electromagnetic waves that have been reflected by the respective interfaces on both the front and back sides of the design member 40 and transmitted through the covering film 30, and the electromagnetic waves that have been transmitted through the covering film 30 without being reflected at the interfaces of the design member 40, as being in-phase with each other, heights h1 and h2 are set such that h1 = n·d/2, and h2 = n·d/2. Wherein for heights h1, h2, n may be the same or may be different.

The design member 40 employing the electromagnetic wave transmitting component 10A is formed with the height h1 of the base plate section 42 and the height h2 of the protruding sections 44 that are based on the wavelength $\lambda$ of electromagnetic waves in air and the relative permittivity $\varepsilon r$ of the design member 40. Namely, the base plate section 18 is formed such that the height h1 is a value close to

$$h1 = n·d/2 = n·\lambda/(2·\varepsilon r^{1/2}) = (n·\lambda g)/2 \qquad (1)$$

Wherein n is a positive integer.

Moreover, when the height h1 of the base plate section 18 is a value close to that of Equation (1), the protruding sections 20 are formed such that the height h2 is a value close to

$$h2 = n·d/2 = n·\lambda/(2·\varepsilon r^{1/2}) = (n·\lambda g)/2 \qquad (2)$$

Wherein n is a positive integer.

This thereby results in a state in which the electromagnetic waves that have been transmitted inside the design member 40 without being reflected, and the electromagnetic waves that have been transmitted reflected at the respective interfaces at both the front and back sides of the design member 40, can be taken as being in-phase with each, and in the electromagnetic wave transmitting component 10A a reduction in the amount of the electromagnetic waves transmitted by the design member 40 is suppressed.

However, due to the interior of the tubes 22, 46 forming the design member 40 being air, the electromagnetic waves propagate in the interior of the tubes 22, 46 with a similar wavelength $\lambda$ to that through air. In this case, the wavelength of the electromagnetic waves propagating inside the tubes 22 of the honeycomb structural body 24 and inside the tubes 46 of the honeycomb structural body 48 are a mixture of wavelength $\lambda g$ and wavelength $\lambda$. However,

due to the thickness of the tubes 22, 46 (the thickness of the walls 26, 50) being thin, the amount of mixing is small, and the wavelength can be taken as being the wavelength λ of electromagnetic waves in air. Namely, in the second exemplary embodiment, by employing the honeycomb structural body 24 arrayed with the plural tubes 22 and employing the honeycomb structural body 48 arrayed with the plural tubes 46, the permittivity of the design member 40 approaches the permittivity of air (the relative permittivity εr approaches 1).

Thus, the base plate section 42 may be formed such that the height h1 is a value close to

$$h1 = n \cdot d/2 = n \cdot \lambda/2 \qquad (3)$$

Wherein n is a positive integer.

Moreover, when the height h1 of the base plate section 42 is a value close to that of Equation (3), the protruding sections 44 may be formed such that height h2 is a value close to:

$$h2 = n \cdot d/2 = n \cdot \lambda/2 \qquad (4)$$

Wherein n is a positive integer.

Thereby, in the design member 40, the electromagnetic waves transmitted without being reflected at the covering film 30 and the reinforcement film 32, and the electromagnetic waves transmitted through the covering film 30 after being reflected, can be taken as being in-phase with each other. In the electromagnetic wave transmitting component 10A employing the design member 40, a reduction in the amount of the electromagnetic waves transmitted is thereby suppressed.

Note that in the honeycomb structural bodies 24, 48, for example, the opening width of the tubes 22, 46 may increase on progression away from the center of the frame 14, namely the nearer to the frame 14. In the electromagnetic wave transmitting component 10A employing the design member 40, a reduction in the amount of the electromagnetic waves transmitted is thereby further suppressed. Moreover, in the design member 40, instead of the reinforcement film 32 on the back face of the base plate section 42, a reinforcement sheet may be employed that is formed in the base plate shape with a thickness within a range that does not affect the transmittance of electromagnetic waves. By employing the base plate shaped reinforcement sheet instead of the reinforcement film 32, the electromagnetic wave transmitting component 10A is able to further raise the load withstanding ability of the design member 40 in the crosswise direction.

Third Exemplary Embodiment

Explanation follows regarding a third exemplary embodiment. The basic configuration of the third exemplary embodiment is similar to that of the first and the second exemplary embodiments, and so the reference numerals of the first and second exemplary embodiments are appended to functional components of the third exemplary embodiment that are equivalent to those of the first or second exemplary embodiments and explanation is omitted thereof.

Fig. 8 illustrates a schematic cross-section of relevant portions of an electromagnetic wave transmitting component 10B according to the third exemplary embodiment. In the electromagnetic wave transmitting component 10B according to the third exemplary embodiment, a design member 60 is employed instead of the design member 16 of the electromagnetic wave transmitting component 10 according to the first exemplary embodiment. Thus, the electromagnetic wave transmitting component 10B differs from the electromagnetic wave transmitting component 10 in that the design member 60 is employed instead of the design member 16. The design member 60 is formed with a base plate section 62 corresponding to the base plate section 18 of the design member 16, and with protruding sections 64 corresponding to the protruding sections 20 of the design member 16. In the third exemplary embodiment, the design member 60 functions as an example of an electromagnetic wave transmitting unit, the base plate section 62 functions as an example of a base plate section, and the protruding sections 64 function as examples of protruding sections.

In the third exemplary embodiment, the design member 60 is formed, for example, with the base plate section 62 and the protruding sections 64 employing a dielectric having a multi-pore structure (porous structure). The dielectric having a multi-pore structure in the third exemplary embodiment functions as an example of a dielectric including plural cavities. Various types of synthetic resin having electrical insulating properties, such as styrene, polypropylene, polyethylene, polystyrene, silicone (for example, a plastic) may be applied as the dielectric forming the design member 60. The design member 60 transmits electromagnetic waves emitted from the radar device 12 using the dielectric.

Any chosen structure formed with plural cavities from at least one of closed cells or open cells may be applied as the multi-pore structure employed in the design member 60. An expanded plastic (foamed plastic) such as expanded polystyrene or expanded polyethylene may, for example, be applied as the dielectric having a multi-pore structure (referred to below as a multi-pore dielectric). In the first exemplary embodiment, for example, expanded polyethylene having a porosity (porosity as defined by JIS K 7138) of 90% or greater is employed to form the base plate section 62 and the protruding sections 64 of the design member 60.

The front face of the design member 60 is tightly covered by the covering film 30. The covering film 30 of the third exemplary embodiment functions as an example of a covering sheet. The covering film 30 seals openings arising from bubbles on the front face of the design member 60 (the front face 62A of the base plate section 62, the front faces 64A of the protruding sections 64, and the side faces 64B of the protruding sections 64) formed employing the multi-pore dielectric, to make a smooth surface without fine indentations and protrusions. Note that in the protruding sections 64 may be formed such that the side faces 64B are formed along the height direction, or may be formed such that the side faces 64B are inclined to the height direction so as to give trapezoidal cross-sectional profiles.

In the design member 60, the base plate section 62 are color coated and the protruding sections 64 are decorated by a metal vapor deposition film by covering with the covering film 30, thereby achieving improved styling of the design member 60. Namely, due to being decorated by covering the framework structure formed from a dielectric with the covering film 30, the design member 60 achieves a high degree of styling.

In the electromagnetic wave transmitting component 10B, however, the protection cover 34 is attached to the end portions on the vehicle front side of the frame 14. The protection cover 34 in the third exemplary embodiment functions as an example of a protection cover.

In the electromagnetic wave transmitting component 10B, however, the protruding section 64 side of the design member 60 is sealed by the protection cover 34, by the protection cover 34 being fitted into the opening on the vehicle front side of the frame 14. In the electromagnetic wave transmitting component 10B, the design face of the design member 60 is visible from the vehicle front side in a protected state by the frame 14 being sealed by the protection cover 34.

The protection cover 34 is abutted by and adhered to the leading ends of the protruding sections 64 (the front faces 64A decorated by metal vapor deposition) of the design member 60 housed inside the frame 14. Thus, in the electromagnetic wave transmitting component 10B, the protection cover 34 is supported by the protruding sections 64 of the design member 60, preventing warping from occurring, and suppressing the generation of vibration of the protection cover 34. Note that at least a portion of the front faces 64A of the protruding sections 64 may abut the protection cover 34, enabling the protection cover 34 and the design member 60 to reinforce each other. Note that although not illustrated in Fig. 8, the electromagnetic wave transmitting component 10B may have a reinforcement film 32 stuck to the face of the base plate section 62 of the design member 60 on the opposite side to the protruding sections 64.

By disposing the electromagnetic wave transmitting component 10B configured in this manner on the propagation path of electromagnetic waves of the radar device 12, the electromagnetic waves from the radar device 12 are emitted at the inside of the frame 14, are transmitted through the design member 60 and the protection cover 34, and emitted forward of the vehicle.

However, the electromagnetic wave transmitting component 10B according to the third exemplary embodiment is formed with the design member 60 that employs a multi-pore dielectric. Generally, in electromagnetic waves that are transmitted through a dielectric, refraction occurs according to the relative permittivity of the dielectric, with greater refraction the higher the relative permittivity. Thus, the thickness and the relative permittivity of the dielectric has a large effect on the directionality of the electromagnetic waves transmitted through the dielectric.

In contrast thereto, in a multi-pore dielectric with a multi-pore structure having plural internal cavities (cells), the relative permittivity changes according to the porosity (or void fraction) indicating the proportion of cells by volume to the total volume, with the higher the porosity the lower the relative permittivity compared to cases in which the porosity is low (for example, no bubbles present). For example, although polyethylene has a relative permittivity $\varepsilon r = 2.30$, expanded polyethylene at a porosity (porosity) of 90% has a relative permittivity $\varepsilon r = 1.11$, and at a porosity of 95%, has a relative permittivity $\varepsilon r = 1.05$.

Thus, in the electromagnetic wave transmitting component 10B formed with the design member 60 using a multi-pore dielectric, refraction of the electromagnetic waves is suppressed, suppressing disturbance from occurring in the directionality of the electromagnetic waves.

However, in a dielectric, reflection occurs for some of the electromagnetic waves at interfaces in contact with air or a member of another substance, and sometimes there is a reduction in the amount transmitted arising from phase shifting due to reflection. In the design member 60 employing the multi-pore dielectric, reflection also occurs with electromagnetic waves at interfaces where faces are in contact with air and the covering film 30.

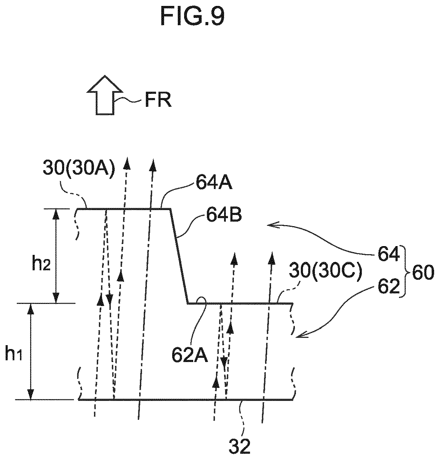

Fig. 9 is a schematic cross-section illustrating relevant portions of the design member 60. The thickness here of the base plate section 62 of the design member 60 along the emission direction of the electromagnetic waves (the arrow FR direction) is height h1, and the projection height of the protruding sections 64 from the front face of the base plate section 62 is height h2. The wavelength $\lambda g$ of the electromagnetic waves inside the design member 60 is expressed from the wavelength $\lambda$ of the electromagnetic waves in air and the relative permittivity $\varepsilon r$ of the design member 60 as $\lambda g = \lambda / \varepsilon r^{1/2}$. Note that in Fig. 9, examples of electromagnetic waves that have been transmitted after being reflected at the interfaces of the design member 60 are indicated by the dashed lines, and the electromagnetic waves that have been transmitted without being reflected at the interfaces of the design member 60 are indicated by the single dot broken lines.

In the electromagnetic waves that are transmitted by the design member 60, due to making the electromagnetic waves that are transmitted by being reflected at the respective interfaces at both the front and back sides of the design member 60, and the electromagnetic waves that are transmitted without being reflected, be in-phase with each other, interference therebetween is prevented, suppressing a reduction in the transmitted amount. In order to make the electromagnetic waves that are transmitted by being reflected at the respective interfaces at both the front and back sides of the design member 60 be emitted in-phase with the electromagnetic waves that are not reflected, for wavelength $\lambda$g, the distance difference d between the propagation distance of the electromagnetic waves not reflected and the propagation distance of the electromagnetic waves that have been transmitted by being reflected at the respective interfaces of both the front and back sides of the design member 60 may be set such that d = n·$\lambda$g/2. Wherein, n = 1, 2, ... (a positive integer). Moreover, for the heights h1, h2 and the distance difference d, h1 = n·d/2 and h2 = n·d/2. Wherein for heights h1, h2, n may be the same or may be different.

Thus, in the third exemplary embodiment, the height h1 of the base plate section 62 of the design member 60, and the height h2 of the protruding sections 64, are defined based on the wavelength $\lambda$ of the electromagnetic waves and the relative permittivity (relative permittivity of the multi-pore dielectric) $\varepsilon$r of the design member 60.

First, the base plate section 18 is formed such that the height h1 is a value close to

$$ h1 = n \cdot d/2 = n \cdot \lambda/(2 \cdot \varepsilon r^{1/2}) = (n \cdot \lambda g)/2 \qquad (1) $$

Wherein n is a positive integer.

Moreover, when the height h1 of the base plate section 18 is a value close to that of Equation (1), the protruding sections 20 are formed such that the height h2 is a value close to

$$ h2 = n \cdot d/2 = n \cdot \lambda/(2 \cdot \varepsilon r^{1/2}) = (n \cdot \lambda g)/2 \qquad (2) $$

Wherein n is a positive integer.

This thereby results in the electromagnetic waves that have been transmitted inside the design member 60 without being reflected, and the electromagnetic waves that have been transmitted by being reflected at the respective interfaces at both the front and back sides of the design member 60, being in-phase with each other, and in the electromagnetic wave transmitting component 10B, a reduction in the amount of the electromagnetic waves transmitted by the design member 60 is suppressed.

Note that although in the third exemplary embodiment, for example, the design member 60 is formed employing the multi-pore dielectric foamed with at least one of closed cells or open cells, any chosen structure formed from a dielectric with plural cavities may be applied therefor. For example, in the design member, a base plate section and a protruding section may be formed by frameworks made from a thin film of a dielectric.

Note that although examples have been illustrated in the first to the third exemplary embodiments described above, the configuration of the present invention is not limited thereto. For example, although in the first and second exemplary embodiments, the design member 16, 40 is formed as an example by an array such that the axial direction of the tubes 22, 46, namely the height direction thereof, is along the vehicle front-rear direction, this being the emission direction of the electromagnetic waves, the orientation of the tubes 22, 46 is not limited thereto. For example, the tubes 22, 46 may be provided with height directions that are inclined so as to intersect with the emission direction of the electromagnetic waves. Namely, the internal spaces of the tubes 22, 46 may be taken as being plural cavities formed inside the design member 16, 40, and the honeycomb structural body 24, 48 can thereby be taken as being a multi-pore dielectric having an extremely high porosity.

Accordingly, even if the base plate section and the protruding sections are formed such that the height direction of the tubes 22, 46 is inclined to the emission direction of the electromagnetic waves, in the electromagnetic wave transmitting component a reduction in the amount of the electromagnetic waves transmitted is still suppressed, and disturbance in the directionality of the electromagnetic waves is suppressed from occurring.

Moreover, although the base plate section and the protruding sections of the design member are formed by employing the multi-pore dielectric in the third exemplary embodiment, and by employing the honeycomb structural body in the first and second exemplary embodiments, there is no limitation thereto. For example, a trussed structure or the like may be applied therefor, in which the base plate section and the protruding sections are formed by employing a thin film of a dielectric, and plural internal cavities are formed in the trussed structure.

Moreover, although in the first and second exemplary embodiments, the base plate section and the protruding section are formed employing the honeycomb structural body arrayed such that the open ends of tubes are in-plane, the configurations of the base plate section and the protruding sections are not limited thereto. For example, the first tubes and the second tubes may be formed by dividing a frame interior corresponding to the planar shape of a base plate section, and a frame inside corresponding to planar shapes of protruding sections, into predetermined shapes, such as a mesh or the like using walls employing a dielectric.

In the present invention, any chosen configuration formed in a flat plate shape by arraying plural individual adjacent first tubes of a first length arrayed such that the respective open ends of the first tubes are in-plane may be applied for the base plate section, and the protruding section may be formed by arraying second tubes projecting from one surface of the base plate section. When doing so, such cases include configurations in which an electromagnetic wave transmitting unit is formed by forming an opening of a predetermined shape in the base plate section, and joining a protruding section and a base plate section formed from arrays of second tubes to the inside of this opening, by fitting the base plate section of the second tubes into the opening formed in the base plate section of the first tubes. In such cases, the first tubes and the second tubes include combinations of tubes of different opening sizes and opening shapes.

Moreover, as long as the second tubes forming the protruding sections are continuous along a propagation path of electromagnetic waves surrounded by a wall, the second tubes may be shaped by connecting plural tubes together, and in such cases, the size of the openings between the connected tubes may be different from each other.

The entire content of the disclosure of Japanese Patent Application No. 2015-157170 filed on August 7, 2015 is incorporated in the present specification by reference.

**Claims**

1. An electromagnetic wave transmitting component comprising:

   an electromagnetic wave transmitting unit including:

   a base plate section formed in a flat plate shape by arraying a plurality of individual adjacent first tubes formed from a dielectric and having a first length, the first tubes being arrayed such that walls of adjacent portions of mutually adjacent of the first tubes are common between the adjacent first tubes, and such that the respective open ends of the first tubes are in-plane, and
   a protruding section joined to the base plate section so as to project from a front face of the base plate section in a predetermined planar shape, the protruding section being formed by arraying a plurality of individual adjacent second tubes formed from another dielectric and having a length that is longer than the first length, the second tubes being arrayed such that walls of adjacent portions of mutually adjacent of the second tubes are common between the adjacent second tubes, and such that the respective open ends of the second tubes form the predetermined planar shape;

   a covering sheet that covers the electromagnetic wave transmitting unit by covering a side face of the protruding section and by sealing open ends of the second tubes at a projection side of the protruding section and open ends of the first tubes at a face on a side of the base plate section from which the protruding section projects; and
   a frame that houses the electromagnetic wave transmitting unit, the frame having one opening end that is sealed by a face of the base plate section on the opposite side of the base plate section to the protruding section.

2. The electromagnetic wave transmitting component of claim 1, wherein the second tubes are each formed by a single tube, or by a plurality of tubes connected together.

3. The electromagnetic wave transmitting component of claim 2, wherein:

   the second tubes are formed from the first tubes forming the base plate section and from third tubes having a size of open ends smaller than that of the first tubes and having a length that is identical to a projection height of the protruding section;
   the protruding section is formed by arraying a plurality of individual adjacent third tubes being arrayed such that walls of adjacent portions of mutually adjacent of the third tubes are common to the adjacent third tubes, and such that respective open ends of the third tubes form the predetermined planar shape; and
   the protruding section is joined to the base plate section formed by the first tubes through a reinforcement sheet covering open ends of the protruding section on the base plate section side so as to reinforce the third tubes.

4. The electromagnetic wave transmitting component of any one of claim 1 to claim 3, further comprising a reinforcement sheet covering a face on the opposite side to the side of the base plate section from which the protruding section projects and reinforcing the base plate section.

5. The electromagnetic wave transmitting component of any one of claim 1 to claim 4, wherein a dielectric including a plurality of internal cavities is filled between a periphery of the base plate section and the frame, and between a periphery of the protruding section and the covering sheet covering the protruding section.

6. The electromagnetic wave transmitting component of any one of claim 1 to claim 5, wherein, for a predetermined wavelength $\lambda$ of electromagnetic waves in air:

    $h1 = (\lambda \cdot n)/2$, wherein h1 is the height of the first tubes in the base plate section and n is a positive integer; and
    $h2 = (\lambda \cdot n)/2$, wherein h2 is the height that the second tubes in the protruding section project from the base plate section and n is a positive integer.

7. The electromagnetic wave transmitting component of any one of claim 1 to claim 6, further comprising a transparent protection cover that seals another opening of the frame.

8. An electromagnetic wave transmitting component comprising:

    an electromagnetic wave transmitting unit including:

       a base plate section formed in a flat plate shape with a specific planar shape by a dielectric including a plurality of internal cavities, and
       a protruding section formed with a predetermined planar shape projecting from one surface of the base plate section by a dielectric including a plurality of internal cavities;

    a covering sheet that covers the electromagnetic wave transmitting unit by covering a side face of the protruding section, and covering a projected front face of the protruding section and a front face of the base plate section on the protruding section side;
    a frame that houses the electromagnetic wave transmitting unit, the frame having one opening that is sealed by a face of the base plate section on the opposite side of the base plate section to the protruding section; and
    a transparent protection cover that seals another opening of the frame.

9. The electromagnetic wave transmitting component of claim 8, wherein, for a predetermined wavelength $\lambda g$ of electromagnetic waves propagating through the dielectric including a plurality of internal cavities:

    $h1 = (\lambda g \cdot n)/2$, wherein h1 is the height of the base plate section along a projection direction of the protruding section from the base plate section, and n is a positive integer; and
    $h2 = (\lambda g \cdot n)/2$, wherein h2 is the height of the protruding section along the projection direction from the base plate section, and n is a positive integer.

10. The electromagnetic wave transmitting component of any one of claim 7 to claim 9, wherein at least a portion of the protruding section abuts the protection cover and supports the protection cover.

11. The electromagnetic wave transmitting component of any one of claim 1 to claim 10, wherein a surface of the covering sheet corresponding to an upper face and side face of the protruding section is colored by metal vapor deposition, and a surface of the covering sheet corresponding to base plate section is colored a specific color.

FIG.1

EP 3 333 589 A1

FIG.2

FR

10

16

18    20    34    30B    30A    30B    30A    30B    22(24)    22(24)

30C    30    30C

28    26    32    26    26    28    14

22    22(24)
(24)

## FIG.3A

## FIG.3B

# FIG.4A

# FIG.4B

# FIG.4C

# FIG.5

# FIG.6A

# FIG.6B

# FIG.7

# FIG.8

# FIG.9

## INTERNATIONAL SEARCH REPORT

| International application No. |
|---|
| PCT/JP2016/070035 |

A.   CLASSIFICATION OF SUBJECT MATTER
*G01S7/03*(2006.01)i, *B32B3/12*(2006.01)i, *B60R19/52*(2006.01)i, *G01S13/93*(2006.01)i, *H01Q1/42*(2006.01)i

According to International Patent Classification (IPC) or to both national classification and IPC

B.   FIELDS SEARCHED

Minimum documentation searched (classification system followed by classification symbols)
G01S7/03, B32B3/12, B60R19/52, G01S13/93, H01Q1/42

Documentation searched other than minimum documentation to the extent that such documents are included in the fields searched
Jitsuyo Shinan Koho         1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y<br>A | JP 2010-188987 A   (Shin-Etsu Polymer Co., Ltd.),<br>02 September 2010 (02.09.2010),<br>paragraphs [0016] to [0040]; fig. 1 to 3<br>(Family: none) | 8-11<br>1-7 |
| Y | JP 9-284030 A   (Sumitomo Electric Industries, Ltd.),<br>31 October 1997 (31.10.1997),<br>paragraph [0006]<br>(Family: none) | 8-11 |
| Y<br>A | JP 2010-111011 A   (Toyota Motor Corp.),<br>20 May 2010 (20.05.2010),<br>paragraphs [0030] to [0035]; fig. 3<br>(Family: none) | 8-11<br>1-7 |

| ☒   Further documents are listed in the continuation of Box C. | ☐   See patent family annex. |
|---|---|

\*     Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    20 September 2016 (20.09.16) | Date of mailing of the international search report<br>    27 September 2016 (27.09.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/070035

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2006-281841 A (Toyoda Gosei Co., Ltd.),<br>19 October 2006 (19.10.2006),<br>paragraph [0006]<br>(Family: none) | 9<br>6 |
| A | JP 2000-304847 A (Honda Motor Co., Ltd.),<br>02 November 2000 (02.11.2000),<br>paragraphs [0006] to [0010]<br>& EP 1045471 A1<br>paragraphs [0019] to [0022] | 1-11 |
| A | JP 2008-507885 A (Anafa-Electromagnetic<br>Solutions Ltd.),<br>13 March 2008 (13.03.2008),<br>entire text; all drawings<br>& US 2009/0167628 A1 & WO 2006/011133 A1<br>& CA 2572666 A1 & KR 10-2007-0040796 A<br>& CN 1993862 A | 1-11 |
| A | Microfilm of the specification and drawings<br>annexed to the request of Japanese Utility<br>Model Application No. 180275/1979(Laid-open<br>No. 95308/1980)<br>(Tokyo Shibaura Electric Co., Ltd.),<br>02 July 1980 (02.07.1980),<br>entire text; all drawings<br>& JP 52-21749 A | 1-11 |
| A | JP 62-240543 A (Mitsubishi Electric Corp.),<br>21 October 1987 (21.10.1987),<br>entire text; all drawings<br>(Family: none) | 1-11 |
| A | JP 6-312473 A (Showa Aircraft Industry Co.,<br>Ltd.),<br>08 November 1994 (08.11.1994),<br>entire text; all drawings<br>(Family: none) | 1-11 |
| A | JP 2006-181813 A (The Yokohama Rubber Co.,<br>Ltd.),<br>13 July 2006 (13.07.2006),<br>entire text; all drawings<br>(Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013214844 A
- JP 2012107913 A
- JP 2010188987 A
- JP 2010230661 A
- JP 2015157170 A